# EUROPEAN PATENT SPECIFICATION

(11) **EP 0 548 539 B1**
(45) Date of publication and mention of the grant of the patent: **08.04.1998**
(21) Application number: 92119653.1
(22) Date of filing: 19.11.1992
(51) Int. Cl.: D07B 1/06

(54) **Steel cord for reinforcement of rubber products**
Stahlseil zur Verstärkung elastomerer Erzeugnisse
Câble d'acier pour le renforcement des articles en caoutchouc

(30) Priority: 27.12.1991 JP 358017/91
(43) Date of publication of application: 30.06.1993
(73) Proprietor: TOKUSEN KOGYO COMPANY LIMITED, Sumiyoshi-cho Ono Hyogo 675-13 (JP)
(72) Inventor: Kobayashi, Yoshirou, Kato-gun, Hyogo 673-14 (JP); Saita, Katsutoshi, Ono, Hyogo 675-13 (JP); Takegawa, Yoshinobu, Ono, Hyogo 675-13 (JP); Hinoura, Koichi, Ono, Hyogo 675-13 (JP)
(74) Representative: Lange, Gerd, Dipl.-Ing.

(56) References cited:
- EP-A- 0 433 962
- US-A- 4 836 262

## Description

### BACKGROUND OF THE INVENTION

This invention relates to a steel cord to be used for reinforcement of rubber products such as automobile tires, conveyor belts, etc.

Generally, this kind of steel cord is constructed by twisting a plural number of material wires and such steel cord is used as reinforcing material of rubber products after being covered with a rubber compound in the state where a plural number of cords are arranged in parallel at prescribed intervals.

By the way, essential conditions required of this kind of steel cord are ① to have excellent mechanical strength, ② to get in good contact with rubber compound chemically and physically, and ③ to ensure good penetration of rubber compound to the inside of the steel cord.

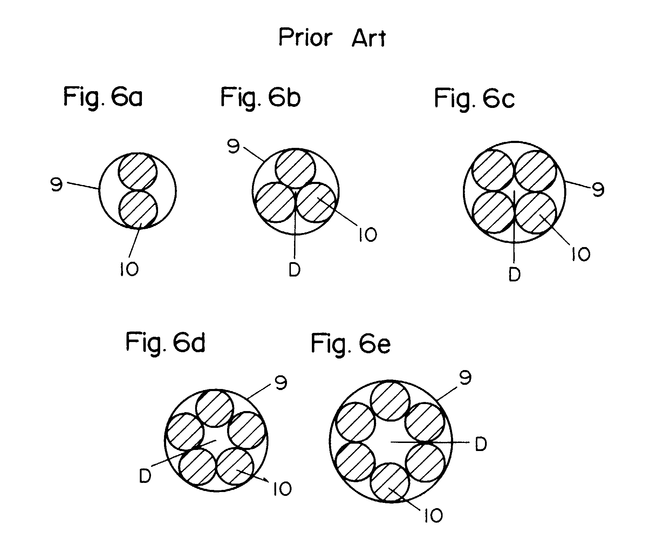

The conventional steel cords 9 are of the so-called closed construction (1x2 - 1x6 construction) in which a plural number of material wires are intertwisted in close contact with one another as shown in Figs. 6a - 6e. Of those steel cords, the steel cords 9 indicated in Figs. 6b - 6e have a closed cavity D at the center of cord formed by a plural number of material wires 10, 10.. constituting the steel cord. For that reason, if you pressurize and vulcanize a plural number of steel cords by pinching them between two rubber sheets, the rubber compound simply covers the periphery of the cords but does not penetrate into said cavity D. As a result, the complex sheet formed did not become a complete complex with rubber because a continuous cavity D exists longitudinally at the central part of the cord.

Moreover, the steel cord 9 of 1x2 construction indicated in Fig. 6a failed to become a complete complex with rubber in the same way as the steel cord of 1x3 - 1x6 construction because the two material wires are in close contact with each other continuously in the longitudinal direction preventing penetration of rubber compound in this part of close contact.

For that reason, in rubber products using the conventional type of steel cord 9 such as automobile tire, for example, the water content produced as a result of condensation of gas emitted by the rubber compound or the water content which penetrated through cuts in the tire used to pass through said cavity in the longitudinal direction at the center of the cord, corroding the steel cord and sharply reducing its mechanical strength. Moreover, said tire produced the so-called "separation phenomenon" in which the rubber compound and the steel cord are separated from each other as a result of a drop of adhesion between steel cord and rubber compound. Furthermore, if repetitive bending stress is exerted on the rubber product using said steel cord 9, said steel cord used to produce fretting wear to remarkably reduce its fatigue resistance, because the respective material wires 10, 10.. adjacent to one another are in linear contact with one another and that the rubber compound hardly penetrates between those material wires.

Under such circumstances, a proposal was made in recent years of a steel cord 11 of so-called open construction (1x2 - 1x6 construction) in which the respective material wires 12, 12.. are intertwisted by providing a clearance C among them while arranging the respective material wires in a larger space as shown in Figs. 7a - 7e (Japanese Patent Application No. 55-90692, for example), or - with a view to a 1x2 construction - by intertwisting a straight material wire with a one material wire having a wavy spiral form, i.e. having small about spiral curls (see Fig.4 of EP-A-0 433 962).

To ensure sufficient penetration of rubber compound also in the central part of the cord in said open twisted cord 11, the clearance C between the respective material wires must be at least equal to 0.01 mm.

However, if said clearance C is set sufficiently large, said steel cord produces the following problems:

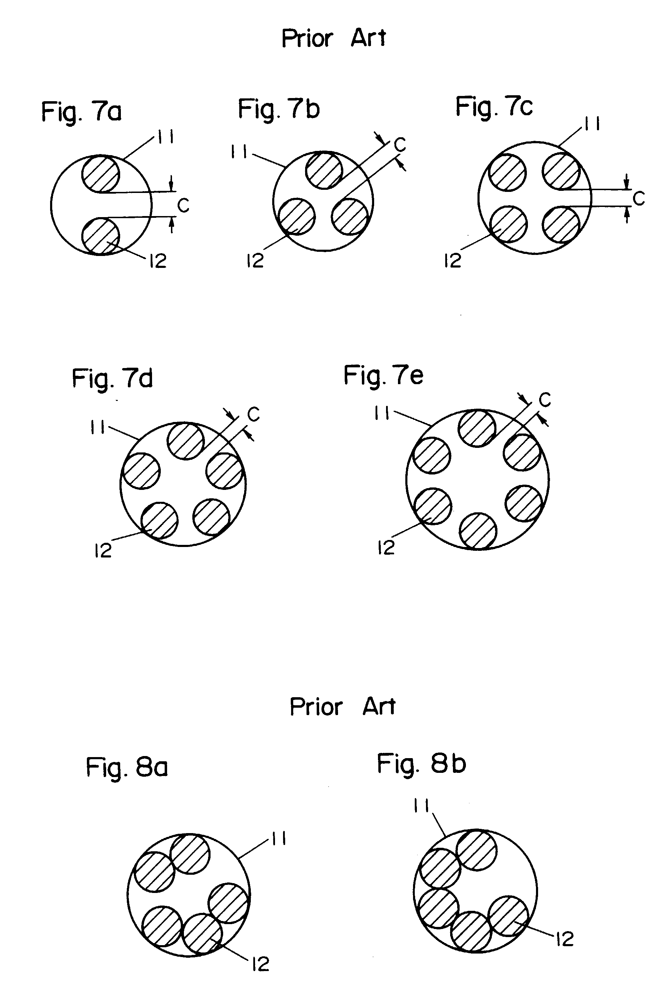

Namely, said steel cord provides a large free space for movement of material wires because the material wires adjacent to one another are in contact only about once in one twist pitch. Consequently, in the case of a steel cord 11 as shown in Fig. 7d, for example, an offset of material wires is produced making the twist uneven in the longitudinal direction as shown in Figs. 8a - 8b, and the steel cord is liable to produce buckling when repetitive bending stress acts on it. Moreover, said steel cord 11 was difficult to handle because of a large elongation of cord in the low load area and the rubber compound did not penetrate to the inside of the cord sufficiently well because said clearance C decreased under the influence of the tension at low load (5 kg, also applicable hereinafter) applied at the time of forming of the complex sheet.

### SUMMARY OF THE INVENTION

The object of the present invention is to provide a steel cord for reinforcement of rubber products with excellent low-load elongation, excellent flexibility and improved handling workability. Another object is to provide a steel cord for reinforcement of rubber products with improved fatigue resistance not producing hardly any buckling or fretting wear even with repeated bending stresses. Still another object is to improve the penetrability of rubber compound to provide complete complex with rubber material.

To achieve said objects, the steel cord of the present invention is composed by intertwisting at least one material wire having small about spiral curls and 1 to 5 material wires having straightness thus restricting the ratio of fracture elongation of the both material wires as well as the elongation of cord at 49N (5 kg) loading.

Namely, the first embodiment of the present invention is a steel cord of 1xn (n = 2 - 6) construction composed by twisting material wire having small about spiral curls with wires having straightness constructed in such a way that the ratio WE of the fracture elongation ε₁ of said material wire having small about spiral curls to the fracture elongation ε₂ of material wires having only twist curls is 1.08 - 1.70 and that the elongation of cord SL (%) at 49N (5 kg) load is 0.13 - 0.50.

Moreover, the second embodiment of the present invention is a steel cord of 1x3 construction of said steel cords composed by twisting material wire having small about spiral curls with wires having straightness constructed in such a way that the ratio WE of the fracture elongation ε₁ of said material wire having small about spiral curls to the fracture elongation ε₂ of material wires having only twist curls is 1.10 - 1.30 and that the elongation of cord SL (%) at 49N (5 kg) load is 0.15 - 0.20.

Said WE is obtained by first measuring the elongation up to breaking of two kinds of material wire taken out by loosening the twist of the steel cord and also measuring their ratio.

By the way, it is enough to have at least one piece of said material wire having small about spiral curls among the material wires composing the cord. However, there are cases where the number of the material wire having small about spiral curls is increased to 2 if the number of materials composing the cord increases. In that case, it is more effective if you arrange the wires in such a way that said material wires having small about spiral curls may not get in contact with each other. It is undesirable to increase the number of the material wires having small about spiral curls too much because it not only increases the low-load elongation of cord but also produces a risk of preventing penetration of rubber compound to inside the cord and destabilizes the twist.

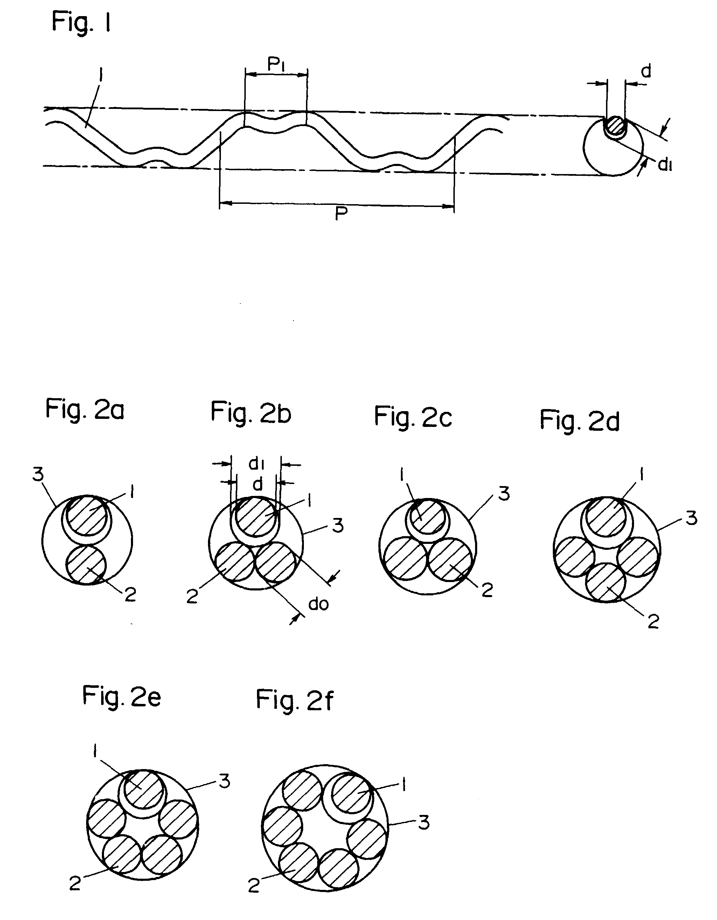

Said material wires having about spiral curls have a complicated shape provided with two different kinds of curl i.e. about spiral curls due to twisting of cord and small about spiral curls having a pitch P₁ as shown in Fig. 1 after the twist of the steel cord is loosened. Moreover, even the material wires having straightness are also provided with spiral curls due to twisting after the twisting of cord.

Moreover, in said steel cord, it is most suitable to set the pitch P at 8 - 16 mm from the viewpoints of productivity, cord strength, stability of twist, flexibility, fatigue resistance and handling workability and set the material wire diameter at 0.10 - 0.40 mm from the viewpoints of strength and flexibility.

In the material wires having small about spiral curls, the shape of such small about spiral curls may not necessarily be the same as the spiral shape due to twisting of cord but is selected as desired. However, that shape shall preferably be selected in a way to have the relation of P₁ = 0.1P - 0.7P and the relation of di = (d + 2/100 mm) - (d + 2/10 mm) between the material wire diameter d and the outside diameter of curl d₁ of material wires having small about spiral curls.

Moreover, it is desirable that the average number of times of contact in one twist pitch between the material wires having small about spiral curls and one material wire having only curls due to twisting adjacent to them be about 1.4 - 4.0 times.

By the way, the numerical restriction in the above construction was obtained by a number of experiments for the following reasons:

If said elongation ratio at breaking WE (ε₁/ε₂) is smaller than 1.08, the rubber compound does not penetrate sufficiently well to the inside of the steel cord when you pressurize and vulcanize a plural number of steel cords by pinching them between two rubber sheets. Moreover, if WE is larger than 1.70, it deteriorates the stability of twist, causing not only a drop of fatigue resistance and of cord strength but also an increase of low-load elongation. Said WE has therefore been set in the range of 1.08 - 1.70.

Moreover, the elongation of cord SL (%) at 49N (5 kg) loading is a restrictive condition imposed on the cord because the elongation of cord cannot necessarily be limited when a plural number of material wires are intertwisted even if the ratio of elongation among material wires is fixed. If said elongation of cord SL (%) is smaller than 0.13, the rubber compound does not penetrate sufficiently to the inside of the steel cord at the time of pressurization and vulcanization. If it is larger than 0.5, it causes an increase of low-load elongation with negative influences on the workability and frequent buckling in the repetitive fatigue test such as tensile test, compressive test, etc. Said SL (%) was therefore set in the range of 0.13 - 0.50.

Moreover, also in the steel cord of 1x3 construction in the second invention, a range providing more favorable effects was limited for the same reason as above.

In the steel cord for reinforcement of rubber products of the present invention composed as mentioned above, the elongation of cord at extremely low load is restricted and the clearance between material wires is also maintained at a fixed level because there exist extremely small clearances between the material wires having small about spiral curls and the adjacent material wires. If you pressurize and vulcanize a plural number of said cords by pinching them between two rubber sheets at prescribed intervals, the rubber compound well penetrates to the inside of the cords through the fine clearances formed between the material wires. As a result, the steel cord is covered with the rubber compound on the entire surface of each material wire and becomes a complete complex with rubber compound, thus preventing corrosion of cord and also preventing any phenomenon of separation between rubber compound and cord and fretting wear among material wires. The handling workability of the cord also improves because the low-load elongation of cord decreases. For example, if there is a large low-load elongation of cord, it produces disadvantages such as puncture of reel at the time of winding of steel cord on the reel, waving of sheet at the time of formation of complex sheet, etc. Such disadvantages can be eliminated with the present invention. Moreover, the present invention provides excellent effects of remarkably improving the fatigue resistance of steel cord with hardly any production of buckling even with the application of repetitive bending stress thanks to an excellent form of twisting.

### BRIEF EXPLANATION OF THE DRAWINGS

Fig. 1 is a schematic explanatory drawing of a material wire having small about spiral curls.

Figs. 2a - 2f are schematic cross-sectional views indicating steel cords of an example according to the present invention.

Figs. 3a - 3d are schematic cross-sectional views indicating steel cords of another example according to the present invention.

Fig. 4 is a schematic side view of the steel cord indicated in Fig. 3c.

Fig. 5a is a sectional view of a complex sheet and Fig. 5b is a schematic sectional view of said sheet used for the belt of a tire.

Figs. 6a - 6e are schematic cross-sectional views indicating conventional 1xn (n = 2-6) closed twisted cords.

Figs. 7a - 7e are schematic cross-sectional views indicating conventional 1xn (n = 2-6) open twisted cords.

Figs. 8a - 8b are schematic sectional views indicating states of deviation of material wires of Fig. 7d.

### EXAMPLE

Fig. 1 is a schematic explanatory drawing of a material wire having small about spiral curls constituting the steel cord for rubber products of the present invention. In the drawing, d is the material wire diameter and d₁ represents the outside diameter of curls.

As means for producing small about spiral curls to said material wire 1, we passed the material wire among a plural number of pins provided on a curling device and rotated that curling device at a high speed with the material wire as pivot to provide the passing material wire with small about spiral curls, and then passed the wire among a plural number of curling cone pins provided immediately before the converging point of the twist to provide it with spiral curls for twisting.

Another means consists in having the material wire bitten by gears, etc. in single wire to provide it with wavy curls and twisting that material wire to produce small about spiral curls to it.

One of said material wires 1 was stranded with 1 - 5 material wires 2 having straightness by means of a buncher stranding machine used as double stranding machine to constitute the steel cords of the present invention as shown in Figs. 2a - 2f. Fig. 2a is a steel cord of 1x2, Figs. 2b - 2c are steel cords of 1x3, Fig. 2c having different diameters d and do of material wire 1. Fig. 2d is a steel cord of 1x4, Fig. 2e is a steel cord of 1x5 and Fig. 2f is a steel cord of 1x5.

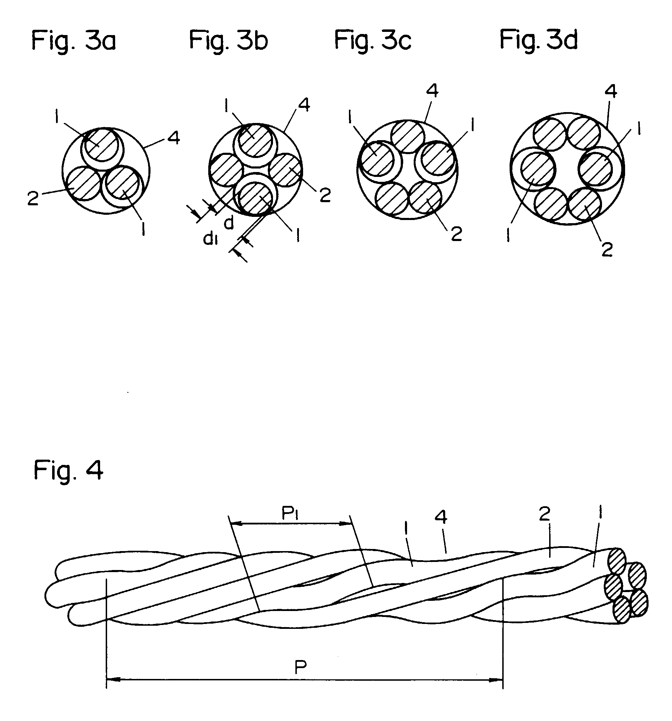

Moreover, Figs. 3a - 3d are steel cords indicating another example. Those steel cords 4 are produced by stranding two of said material wires 1 with 1 - 4 materials wires having straightness in the same way as above.

The materials wires 1, 2 having straightness constituting said steel cords 3, 4 have a spiral shape formed as a result of stranding of the cords.

The outside diameter di of the curl of the material wire 1 in said steel cords is in the range of d₁ = (d + 2/100mm)-(d+2/10mm). Moreover, the fracture elongation ratio of said material wire 1 and material wire 2 ε₁/ε₂ was ε₁/ε₂ = 1.08 - 1.70. The elongation SL (%) at 49N (5 kg) loading of said steel cords was SL (%) = 0.13 - 0.50.

To select and determine the range of values of fracture elongation of each material wire, we changed the diameter and interval of cone pins, the degree of pushing in, the tension of material wire, etc. in various ways for each material and adjusted the number of revolutions of overstranding roller after stranding, the degree of pushing in of straightening roller, etc.

Moreover, the value of elongation SL (%) of cord at 49N (5 kg) loading is not necessarily determined by the ratio of fracture elongation WE (ε₁/ε₂) of said material wire 1 to material wire 2 but rather relates to the way of stranding of said material wire 1 and material wire 2 such as size of outside diameter of the spiral curl shape of material wire 2, for example. We decided therefore the range of values of said SL by adjusting the cone pins, etc. in the same way as for each material wire mentioned earlier.

Next, we prepared steel cords of various constructions by stranding a plural number of material wires consisting of hard steel wires of a carbon content of 80% provided with brass plating on the surface by means of a buncher stranding machine in the same way as the example by changing in various ways material wire diameter, number of material wires, number of material wires having small about spiral curls, outside diameter of such curls, ratio of fracture elongation WE (ε₁/ε₂) of material wires having small about spiral curls to material wires having straightness and low-load elongation of cord 49N (5 kg) load.

In this experiment, we produced spiral curls to all filaments of the conventional steel cords (experiment Nos. 1, 2, 6, 7, 13, 14) by passing them among 3 - 5 pins of a curling cone provided before the converging point of stranding. The experiment Nos. 1, 6, 13 represent cords of closed stranding of the constructions indicated in Fig. 6a, Fig. 6b and Fig. 6d respectively while the experiment Nos. 2, 7, 14 are cords of open stranding indicated in Fig. 7a, Fig. 7b and Fig. 7d respectively.

To realize an open strand construction as in experiment Nos. 2, 7, 14, we made excessive curls by slightly changing the diameter and intervals of cone pins, the material wire tension, etc. from those in the case of closed stranding.

In the steel cords of the reference examples (experiment Nos. 3, 8, 9, 15) and the examples of the present invention (experiment Nos. 4, 5, 10-12, 16, 17), we used the same curling means as above to the material wires having straightness. As means of producing small about spiral curls to material wires, we passed the material wire among a plural number of pins provided on a curling device and rotated that curling device at a high speed with the material wire as pivot to provide the passing material wire with small about spiral curls, and then passed the wire among a plural number of curling cone pins provided immediately before the converging point of the twist to provide it with spiral curls for twisting.

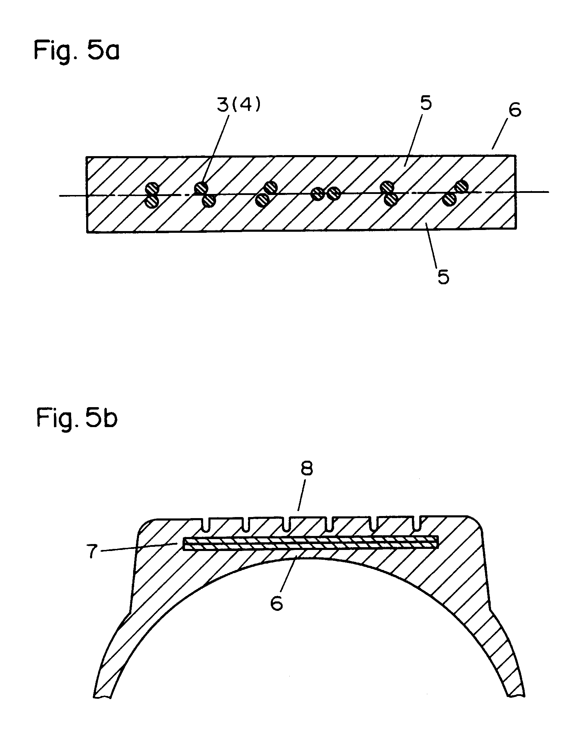

By using those steel cords of experiments Nos. 1-17, we prepared complex sheets 6 by pressurizing and vulcanizing the steel cords pinched between two rubber sheets 5, 5 as indicated in Fig. 5a and used such complex sheet 6 for the belt 7 of a tire 8 (Fig. 5b).

And we evaluated fracture strength in each state of various steel cords, penetration ratio of rubber compound between material wires at the time of vulcanization of rubber compound, compressive tensile bending and fatigue resistance as complex with rubber compound, elongation of cord at 49N (5 kg) loading and handling workability at the time of processing of rubber products respectively. Table 1 indicates the results of such evaluation.

In the Table, P indicates the stranding pitch, NS the number of material wires having small about spiral curls, d the diameter of such material wires, di the outside diameter of curls of such material wires, do the wire diameter of materials having twist curls only, WE the ratio of the fracture elongation of material wires having small about spiral curls to the fracture elongation of material wires having only twist curls, RP the penetrability of rubber compound, SL the elongation of cord at 49N (5 kg) loading, RP the compressive tensile bending and fatigue resistance and HW the handling workability.

**Table 1**

| Experiment No. | P mm | NS | d mm | d₁ mm | d₀ mm | WE | FS N (kgf) | RS | RP (%) | SL (%) | RF | HW | Construction of cord |
|---|---|---|---|---|---|---|---|---|---|---|---|---|---|
| 1 | 14 | 0 | - | - | 0.30 | - | 416 (42.4) | 70 | 0 | 0.13 | 100 | ○ | 1×2 |
| 2 | 14 | 0 | - | - | 0.30 | - | 412 (42.0) | 70 | 90 | 0.67 | 105 | × | " |
| 3 | 14 | 1 | 0.30 | 0.32 | 0.30 | 1.06 | 415 (42.3) | 68 | 70 | 0.14 | 98 | ○ | " |
| 4 | 14 | 1 | 0.30 | 0.34 | 0.30 | 1.08 | 414 (42.2) | 72 | 90 | 0.15 | 105 | ○ | " |
| 5 | 14 | 1 | 0.30 | 0.38 | 0.30 | 1.20 | 415 (42.3) | 75 | 95 | 0.23 | 110 | ○ | " |
| 6 | 8 | 0 | - | - | 0.28 | - | 541 (55.2) | 80 | 0 | 0.13 | 100 | ○ | 1×3 |
| 7 | 8 | 0 | - | - | 0.28 | - | 534 (54.5) | 80 | 95 | 0.65 | 107 | × | " |
| 8 | 8 | 1 | 0.28 | 0.30 | 0.28 | 1.06 | 535 (54.6) | 80 | 65 | 0.15 | 97 | ○ | " |
| 9 | 8 | 1 | 0.28 | 0.41 | 0.28 | 1.80 | 497 (50.7) | 75 | 100 | 0.28 | 90 | Δ | " |
| 10 | 8 | 1 | 0.28 | 0.35 | 0.28 | 1.15 | 533 (54.4) | 90 | 100 | 0.18 | 118 | ○ | " |
| 11 | 8 | 1 | 0.23 | 0.28 | 0.28 | 1.25 | 532 (54.3) | 91 | 100 | 0.17 | 120 | ○ | " |
| 12 | 8 | 1 | 0.28 | 0.37 | 0.28 | 1.60 | 515 (52.6) | 85 | 100 | 0.23 | 105 | ○ | " |
| 13 | 10 | 0 | - | - | 0.25 | - | 686 (70.0) | 80 | 0 | 0.14 | 100 | ○ | 1×5 |
| 14 | 10 | 0 | - | - | 0.25 | - | 668 (68.2) | 80 | 100 | 0.60 | 110 | × | " |
| 15 | 10 | 1 | 0.25 | 0.42 | 0.25 | 1.85 | 611 (62.3) | 73 | 100 | 0.40 | 90 | Δ | " |
| 16 | 10 | 1 | 0.25 | 0.32 | 0.25 | 1.40 | 665 (67.9) | 85 | 100 | 0.20 | 113 | ○ | " |
| 17 | 10 | 1 | 0.25 | 0.37 | 0.25 | 1.70 | 657 (67.0) | 85 | 100 | 0.35 | 110 | ○ | " |

The evaluation in the above test was performed in the following way:

### Fracture strength FS:

This is the breaking load of steel cord only before its burial in the rubber sheet.

### Residual strength after fatigue test RS:

We buried a plural number of steel cords in a rubber sheet, performed repetitions of bending fatigue (test) with this sheet a certain number of times by using a 3-point pulley bending fatigue tester, took out the cords from the rubber sheet, measured the fracture strength, compared it with the fracture strength before fatigue test and indicated them in index respectively.

### Penetration ratio of rubber compound RP (%):

After burying each cord in a rubber compound (ordinary rubber compound used as tire breaker for burying steel cord) the 100% modulus of which is 343 N/cm² (35 kg/cm2) and vulcanizing it in the state where a tensile load of 49N (5 kg) is applied to each cord, we extracted the steel cord, observed it at a certain length by decomposing it and indicated the ratio of the length having a trace of contact with rubber compound to the observed length in percentage. This value must be no less than 60.

### Elongation of cord at 49N (5 kg) loading SL (%):

This is the elongation of each cord and shall preferably be no more than 0.40% from the viewpoints of handling workability and stability of stranding.

### Compressive tensile bending and fatigue resistance RF:

A plural number of steel cords were buried in a rubber sheet and the compressive tensile bending and fatigue resistance was evaluated with this sheet by using a 3-point pulley bending fatigue tester. The results of the test are expressed in index against base 100 of the conventional example of cord of closed stranding of experiments Nos. 1, 6, 13. The cord is eventually broken by fretting wear, buckling, etc. and the evaluation was made by the number of times of repetition up to the time of breaking.

### Handling workability HW:

This means the handling workability of steel cord in the manufacture and in the forming process of complex sheet, including ease of flaring, low-load elongation, intertwisting between steel cords, straightness, etc. of steel cord. The evaluation was made as x if much inferior compared with the conventional cord of closed stranding, Δ if slightly inferior and as O if there is no difference between the two. The values of WE (ε₁/ε₂) in the reference example and the example are indicated in the mean value of all ε₁/ε₂ values obtained by measuring ε₁, ε₂ in each material wire and combining them.

In Table 1, the conventional examples of experiments Nos. 1, 6, 13 represent cords of closed stranding with excellent stability of stranding, small low-load elongation and excellent handling workability HW but with poor penetrability of rubber compound SL.

The conventional examples of experiments Nos. 2, 7, 14 represent cords of open stranding of a mean shaping ratio (cord diameter at the time when the material wires are stranded with a clearance between the respective wires/cord diameter at the time when the material wires are stranded tight x 100) of 116 - 120%. Those examples showed excellent penetrability RP of rubber compound and compressive tensile bending and fatigue resistance RF but poor handling workability HW with large elongation SL of cord at 49N (5 kg) loading.

The reference examples of experiments Nos. 3, 8, 9, 15 are steel cords made by using material wires having small about spiral curls and with said WE of a value different from that of the present invention. The experiments Nos. 3, 8 were inferior in residual strength RS and compressive tensile bending and fatigue resistance RF because their WE is smaller than the lower limit value of 1.08 while the experiments Nos. 5, 15 were inferior in fracture strength FS, residual strength RS, compressive tensile bending and fatigue resistance RF and handling workability HW because their WE is larger than the upper limit value 1.70.

On the contrary, the steel cords of the present invention of the experiments Nos. 4, 5, 10-12, 16, 17 were satisfactory in all of fracture strength FS, residual strength RS, penetrability of rubber compound, elongation SL of cord at 49N (5 kg) loading, compressive tensile bending and fatigue resistance RF and handling workability HW.

Among the steel cords of 1x3 construction, the steel cords of experiments Nos. 10, 11 included in the range of WE = 1.1 - 1.3 and SL = 0.15 - 0.20 proved to be apparently superior to the steel cord of experiment No. 12 in fracture strength FS, residual strength RS and compressive tensile bending and fatigue resistance RF.

Moreover, we also evaluated the steel cords of lx4 and 1x6 constructions in the same way as above. As a result, the steel cords of the present invention indicated about the same tendencies as above and satisfied all the items of evaluation, proving to be most appropriate as material for reinforcement of rubber products.

## Claims

1. A steel cord (3) for reinforcement of rubber products of the so-called 1 x n construction,being the number "n" of the wires comprised between 2 and 6, said cord being composed by twisting at least one material wire (1), having small about spiral curls to improve the penetrability of rubber into the cord, with 1 to 5 straight material wires (2), characterized in that the ratio WE of the fracture elongation El of said material wire (1) having small about spiral curls to the fracture elongation E2 of material wires (2) having straightness is 1.08 - 1.70 and that the elongation of cord SL (%) at 49 N (5 kg) load is 0.13 - 0.50.

2. A steel cord for reinforcement of rubber products as defined in claim 1, wherein the material wire (1) having small about spiral curls satisfies the following relation:${\text{d}}_{\text{1}} \text{= (d + 2/100 mm) - (d + 2/10 mm),}$ whereby "d₁" is the outside diameter of the curl and "d" is the diameter of material wire.

3. A steel cord for reinforcement of rubber products as defined in claim 1, wherein the material wire diameter is 0.10 - 0.50 mm.

4. A steel cord for reinforcement of rubber products as defined in claim 1, wherein the twist pitch P of the steel cord and the curl pitsch P1 of the material wire (1) having small about spiral curls satisfy the following relation:${\text{P}}_{\text{1}} \text{= 0,1 P - 0.7 P}$

5. A steel cord for reinforcement of rubber products as defined in claim 1, wherein the twist pitch P of the steel cord is 8 - 16 mm.

## Patentansprüche

1. Stahlseil zur Verstärkung elastomerer Erzeugnisse
- bestehend aus einer sogenannten 1 x n Konstruktion, wobei "n" die Anzahl der Einzeldrähte zwischen 2 und 6 bedeutet und das Stahlseil durch Verdrillung von 1 bis 5 geraden Drähten mit mindestens einem Draht hergestellt ist, der zur Verbesserung des Eindringens der Gummimischung in das Stahlseil mit geringen, etwa spiralförmigen Wellen vorverformt ist,
dadurch gekennzeichnet,
- daß das Verhältnis WE der Bruchdehnung E1 des Drahtes (1), der die geringe, etwa spiralförmige Vorverformung aufweist, zu der Bruchdehnung E2 der geraden Drähte (2) zwischen 1,08 und 1,70 liegt
- und daß die Längsdehnung SL (%) des Stahlseils bei einer Last von 49 N (5 kg) zwischen 0,13 und 0,50 beträgt.

2. Stahlseil zur Verstärkung elastomerer Erzeugnisse nach Anspruch 1,
dadurch gekennzeichnet,
- daß der Draht (1) mit der geringen, etwa spiralförmigen Vorverformung die folgende Bedingung erfüllt${\text{d}}_{\text{1,}} \text{= (d + 2/100 mm) - (d + 2/10 mm),}$ wobei "d₁" der äußere Durchmesser der spiralförmigen Vorverformung und "d" der Drahtdurchmesser ist.

3. Stahlseil zur Verstärkung elastomerer Erzeugnisse nach Anspruch 1,
dadurch gekennzeichnet,
- daß der Drahtdurchmesser 0,10 - 0,50 mm beträgt.

4. Stahlseil zur Verstärkung elastomerer Erzeugnisse nach Anspruch 1,
dadurch gekennzeichnet,
- daß die Windungshöhe P einer Drillung des Stahlseils und die Windungshöhe P1 der spiralförmigen Vorverformung des Drahtes (1) folgende Bedingung erfüllt:${\text{P}}_{\text{1}} \text{= 0,1 P - 0,7 P.}$

5. Stahlseil zur Verstärkung elastomerer Erzeugnisse nach Anspruch 1,
dadurch gekennzeichnet,
- daß die Windungshöhe P des Stahlseils 8 - 16 mm beträgt.

## Revendications

1. Un câble en acier (3) pour le renforcement de produits en matériau(x) élastomère(s) présentant la structure dénommée 1 x n, "n" étant le nombre de fils compris entre 2 et 6, ledit câble étant réalisé en soumettant à la torsion au moins un fil (1) en matériau, présentant de petites boucles ou vrilles sensiblement en forme de spirale pour améliorer la pénétrabilité (l'adhérence) de l'élastomère (caoutchouc) dans (sur) le câble, avec de 1 à 5 fils (2) en matériau droit, caractérisé en ce que le rapport WE entre, d'une part, l'allongement à la rupture E1 dudit fil (1) en matériau présentant de petites boucles ou vrilles sensiblement en forme de spirale et, d'autre part, l'allongement à la rupture E2 des fils (2) en matériau se présentant droits, est compris entre 1,08 et 1,70, et en ce que l'allongement du câble SL (en %) sous une charge de 49 N (5 kg) est compris entre 0,13 et 0,50.

2. Un câble en acier pour le renforcement de produits en matériau(x) élastomère(s), tel que défini à la revendication 1, dans lequel le fil (1) en matériau présentant de petites boucles ou vrilles sensiblement en forme de spirale satisfait à la relation suivante :${\text{d}}_{\text{1}} \text{= (d + 2/100 mm) - (d + 2/10 mm)}$ dans laquelle "d₁" est le diamètre extérieur de la boucle ou vrille, et "d" est le diamètre du fil en matériau.

3. Un câble en acier pour le renforcement de produits en matériau(x) élastomère(s), tel que défini à la revendication 1, dans lequel le diamètre du fil en matériau est compris entre 0,10 et 0,50 mm.

4. Un câble en acier pour le renforcement de produits en matériau(x) élastomère(s), tel que défini la revendication 1, dans lequel le pas de torsion P du câble en acier et le pas de boucle P1 du fil (1) en matériau présentant de petites boucles ou vrilles sensiblement en forme de spirale, satisfont à la relation suivante :${\text{P}}_{\text{1}} \text{= de 0,1 P à 0,7 P}$

5. Un câble en acier pour le renforcement de produits en matériau(x) élastomère(s), tel que défini à la revendication 1, dans lequel le pas de torsion P du câble en acier est compris entre 8 et 16 mm.
